# EUROPEAN PATENT SPECIFICATION

(11) **EP 1 545 150 B1**
(45) Date of publication and mention of the grant of the patent: **14.10.2009**
(21) Application number: 03028893.0
(22) Date of filing: 16.12.2003
(51) Int. Cl.: H04R 1/02

(54) **Portable electronic communication device**
Tragbares elektronisches Kommunikationsgerät
Appareil de communication électronique portable

(43) Date of publication of application: 22.06.2005
(73) Proprietor: HTC Corporation, Taoyuan County 330 (TW)
(72) Inventor: Jensen, Lee, Sindian City Taipei County 231 (TW); Ho, San-Chi, Yunghe City Taipei (TW)
(74) Representative: Weber, Joachim

(56) References cited:
- EP-A- 0 977 414
- EP-A- 1 091 539
- US-A- 5 692 046
- US-A- 6 002 949
- US-B1- 6 324 284

## Description

### BACKGROUND OF THE INVENTION

### Field of the Invention

The invention relates in general to a portable electronic communication device, and more particularly to a portable electronic communication device having a receiver that allows sound to radiate out of a cover of the device from both sides of the cover so that a user of the device can hear voice information of the device by approaching his (her) ear to either one of the both sides of the cover.

### Description of the Related Art

In the technology-advanced era nowadays, portable electronic communication devices have become an indispensable part of the day-to-day life of modern people. The types of portable electronic communication devices are many, for example, wireless personal digital assistants (PDAs) and mobile phones. A user can, for example, use a wireless PDA to make and receive phone calls, to memo a note, to edit an address book, to look up a dictionary, and to listen to music. The presence of portable electronic communication devices really makes the life of modern people easier, and reduces the gap of communication between people.

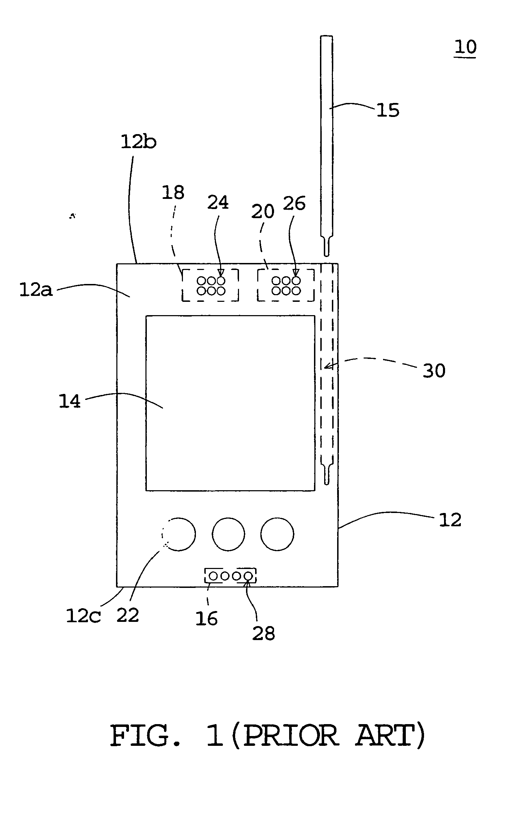

Please refer to FIG. 1 that is a diagram of a traditional wireless PDA 10. In FIG. 1, the wireless PDA 10 includes a case 12, a touch display panel 14, a stylus 15, a microphone 16, a receiver 18, a speaker 20, and several operating buttons 22. The case 12 includes a stylus slot 30, a front surface 12a, and top and bottom surfaces 12b and 12c. The front surface 12a of the case 12 is connected to the top and bottom surfaces 12b and 12c of the case 12. The opening of the stylus slot 30 is located in the top surface 12b of the case 12, and the stylus slot 30 is used for accommodating the stylus 15. The touch display panel 14 and the operating buttons 22 are located on the front surface 12a of the case 12, whereas the microphone 16, the receiver 18, and the speaker 20 are located inside the case 12. Several apertures 24, 26, and 28 are located in the front surface 12a of the case 12; the apertures 28 are used for the microphone 16 to receive voice from a user of the wireless PDA 10, and the apertures 24 and 26 are used for allowing the sound from the receiver 18 and the speaker 20 respectively to radiate out of the case 12.

The user can use the stylus 15 to activate the touch display panel 14 to enter text and commands or use the operating buttons 22 to enter commands. The user can use the microphone 16 and the receiver 18 to talk to and listen to a phone call when the wireless PDA is in a phone mode. The user can even use the speaker 20 to play the voice of the calling party out during the phone call.

The technology for the receiver 18 to create sound is based on both the magnet and the air compression that make the receiver diaphragm vibrate. Receivers nowadays are usually dipolar; it means that the receiver creates positive and negative phase sound waves simultaneously. Due to the fact that the positive phase and negative phase of sound waves interfere with each other, the manufacturers have to use a special technique to allow the receiver 18 to output only the positive phase sound that radiates out of the case 12 through the apertures 24. If the PDA is to be made capable of giving off sound on both sides, the manufacturers need to use two receivers to solve the interference problem of the positive and the negative phase of the sound waves. In doing so, the cost of manufacturing and the size of the wireless PDA 10 are increased.

US-A-5692046 discloses a foldable telephone handset having a transformable hinge connecting two substrates at curved mating edges. The transformable hinge is capable of folding between a closed position for storage and an open position for use. In the open position, the telephone handset exhibits an audio transducer for communication of sound with the user's head as well as a microphone.

US-A-6002949 discloses a handset with a single transducer for handset and handsfree functionality. The transducer is mounted within an enclosure having front and back chambers separated by a partition. The front chamber as well as the back chamber each comprise acoustic ports.

US 6 324 284 B1 describes a telephone headset with enhanced handset/handsfree receiving and alerting audio quality comprising a sealed unit receiver and a loudspeaker, first apparatus for providing sound from the receiver to the ear of a user when the ear of a user is sealed to the handset, and second apparatus for providing sound from the receiver and from the loudspeaker to the ear of the user when the ear of the user is only partly sealed to the handset.

EP 0 977 414 A2 refers to a foldable mobile telephone terminal comprising a housing, a member pivotally mounted to the housing such that the terminal can be brought into an open and a closed state depending on the position of the member and a speaker unit including a first speaker device which is operable for voice output in the closed state.

### SUMMARY OF THE INVENTION

It is an object of the present invention to provide a portable electronic communication device which allows a user to use same in both, a handset mode and a handfree mode, while retaining a good audio quality in both modes.

According to the invention, the object is solved by the features of the main claim. The sub-claims contain further preferred developments of the invention.

It is therefore an object of the invention to provide a portable electronic communication device, which is designed to have a single receiver received in a cover of the device. Two sets of apertures are defined in opposite surfaces of the cover around the receiver. Such a design allows the user to listen to a phone call when the cover is folded upon a base of the device and faces either forwardly or rearwardly to thereby increase the usability of the device.

The invention achieves the above-identified object by providing a portable electronic communication device that includes a base, a cover having front and rear surfaces and a compartment between the front and rear surfaces, and a receiver. The cover is mounted to the base in such a way that the cover can be both folded and swiveled relative to the base so that the cover can lie on the base with the front surface or the rear surface of the cover facing toward the base. The front surface and the rear surface of the cover h ave a n umber of first apertures and a number of second apertures respectively, and the compartment communicates with an outside of the cover through the first apertures and the second apertures. The receiver is deposited in the compartment between the first apertures and the second apertures and is used as a means for transmitting voice information to the user of the portable electronic communication device, while the cover is folded upon the base in such a way that the front surface or the rear surface of the cover faces the base. The sound produced from the receiver radiates out of the cover through the second apertures or the first apertures of the cover so that the user of the device can hear the voice information by approaching his (her) ear to the front face or the rear face of the cover.

The invention achieves the above-identified object also by providing a wireless personal digital assistant (PDA) that includes a base, a cover, and a receiver. The base has a front surface and the cover is deposited on the base in such a way that the cover can be folded upon, unfolded from, and swiveled about the base. The cover has a compartment, a front surface and a rear surface. The front surface and the rear surface of the cover have a number of first apertures and a number of second apertures respectively, and the compartment communicates with an outside of the cover through the first apertures and the second apertures. The first apertures have a total cross-sectional area which is substantially the same as that of the second apertures. The receiver is deposited in the compartment for dividing the compartment into a first sub-compartment and a second sub-compartment. The first and second sub-compartments have substantially the same volume. Furthermore, the first sub-compartment and the second sub-compartment communicate with the outside of the cover through the first apertures and the second apertures respectively. The receiver is used as a means for transmitting voice information of the wireless PDA to a user thereof, while the cover is folded upon the base in such a way that the front surface or the rear surface of the cover faces the front surface of the base. The sound produced from the receiver could radiate out of the cover through the second apertures or the first apertures of the cover.

The invention achieves the above-identified object also by providing a wireless personal digital assistant (PDA) that includes a base, a cover, and a receiver. The cover is deposited on the base in such a way that cover can be folded upon, unfolded from, and turned around the base. The receiver is deposited inside the cover for producing sound that can be heard by a user by approaching his (her) ear to front or rear surface of the cover.

Other objects, features, and advantages of the invention will become apparent from the following detailed description of the preferred but non-limiting embodiments. The following description is made with reference to the accompanying drawings.

### BRIEF DESCRIPTION OF THE DRAWINGS

FIG. 1 is a diagram of a traditional wireless PDA.

FIG. 2 is a 3-D diagram showing a portable electronic communication device according to the present invention in a first folded status.

FIG. 3 is a 3-D diagram showing that the portable electronic communication device according to the present invention is unfolded from the position of FIG. 2.

FIG. 4 is an enlarged cross-sectional view taken along line 4-4' of FIG. 2.

FIG. 5 is a 3-D diagram showing that the cover has been turned an angle relative to the base from the position of FIG. 3.

FIG. 6 is a 3-D diagram showing that the cover is further turned an angle from the position of FIG. 5.

FIG. 7 is a 3-D diagram showing that the cover is folded upon the base from the position of FIG. 6 so that the portable communication device according to the present invention moves from the first folded status of FIG. 2 to reach a second folded status.

FIG. 8 is an enlarged cross-sectional view taken along line 8-8' of FIG. 7.

### DETAILED DESCRIPTION OF THE INVENTION

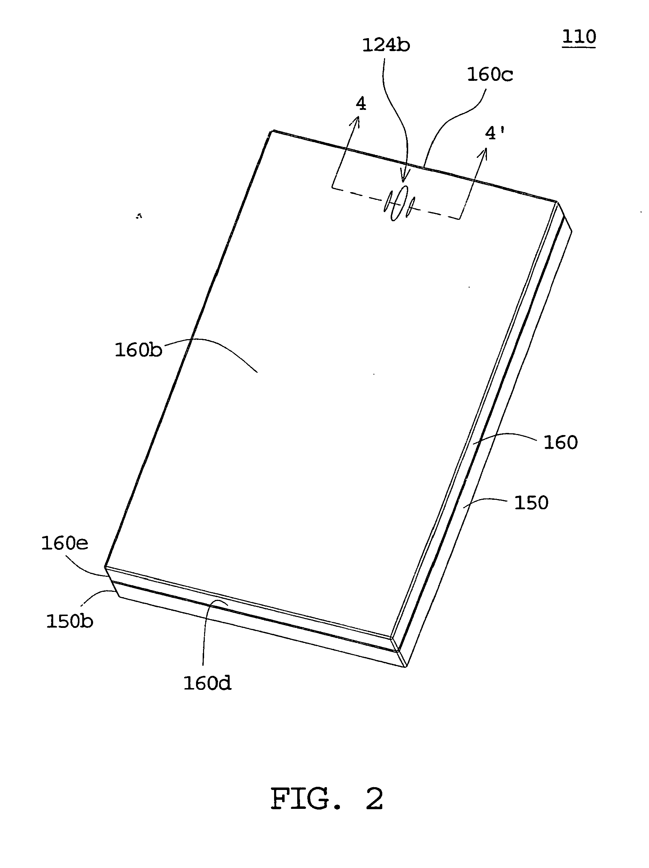

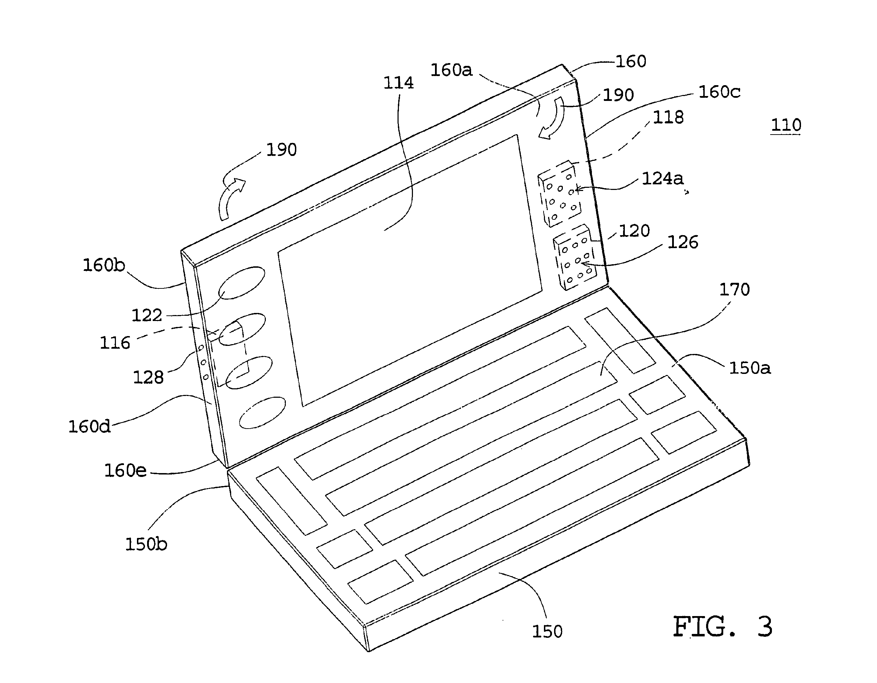

Please refer to FIG. 2 and FIG. 3; they are 3-D diagrams showing a portable electronic communication device 110 according to the present invention in folded and unfolded positions, respectively. In FIG. 2 and FIG. 3, the portable electronic communication device 110 includes a base 150, a cover 160, a receiver 118, a touch display panel 114, several operating buttons 122, a microphone 116, a speaker 120, and a keyboard 170. The base 150 consists of a front s urface 1 50a a nd a lateral s urface 1 50b. T he front surface 150a is connected to the lateral surface 150b. The keyboard 170 is located on the front surface 150a of the base 150 and is used for entering commands and editing texts. The keyboard 170 according to the present invention is a QWERTY keyboard. The cover 160 consists of a front surface 160a, a rear surface 160b, and three lateral surfaces 160c, 160d, and 160e. The lateral surface 160e is connected to the opposite lateral surfaces 160c and 160d, and the lateral surfaces 160c, 160d, and 160e are used for connecting the front surface 160a and the rear surface 160b of the cover 160. The method how the cover 160 is manipulated to make the front surface 160a or the rear surface 160b of the cover 160 rests against the front surface 150a of the base 150 will be described below.

The invention offers a hinge and swivel device (not shown in the drawing) that connects the lateral surface 160e of the cover 160 to the lateral surface 150b of the base 150 so that the cover 160 can be folded and swivelled relative to the base 150. Since such a hinge and swivel device is well known to a person skilled in the art, and widely used in some notebooks and mobile phones, detailed description thereof is omitted here. Furthermore, the front surface 160a of the cover 160 has a number of apertures 124a and 126 near the lateral surface 160c, and the lateral surface 160d of the cover 160 has a number of apertures 128, as shown in FIG. 3. The rear surface 160b of the cover 160 has a number of apertures 124b near the lateral surface 160c of the cover 160, as shown in FIG. 2. The apertures 124b face in a direction opposite to that one which the apertures 124a face, and the apertures 124a have a total cross-sectional area, which is substantially equal to that of the apertures 124b.

The touch display panel 114 is deposited on the front surface 160a of the cover 160 and is used for displaying or inputting text or commands when it is activated by a stylus (not shown in the drawings). The operating buttons 122 are located on the front surface 160a of the cover 160 between the touch display panel 114 and the lateral surface 160d of the cover 160, and are used for inputting commands. The microphone 116 is deposited inside the cover 160 between the touch display panel 114 and t he lateral surface 160d of the cover 160, and is used for receiving voice of a user of the device 110 via the apertures 128. The speaker 120 is deposited inside the cover 160 between the touch display panel 114 and the lateral surface 160c of the cover 160. When the cover 160 is unfolded from the base 150, the portable electronic communication device 110 uses the speaker 120 as a means to generate voice information to be heard by the user of the device 110. The voice information radiates out of the cover 160 via the apertures 126.

The receiver 118 is deposited inside the cover 160 between the touch display panel 114 and the lateral surface 160c of the cover 160. When the cover 160 is folded upon the base 150, the portable electronic communication device 110 uses the receiver 118 as the means to generate the voice information. The voice information generated by the receiver 118 radiates out of the cover 160 via the apertures 124a or 124b, as detailed in the following description.

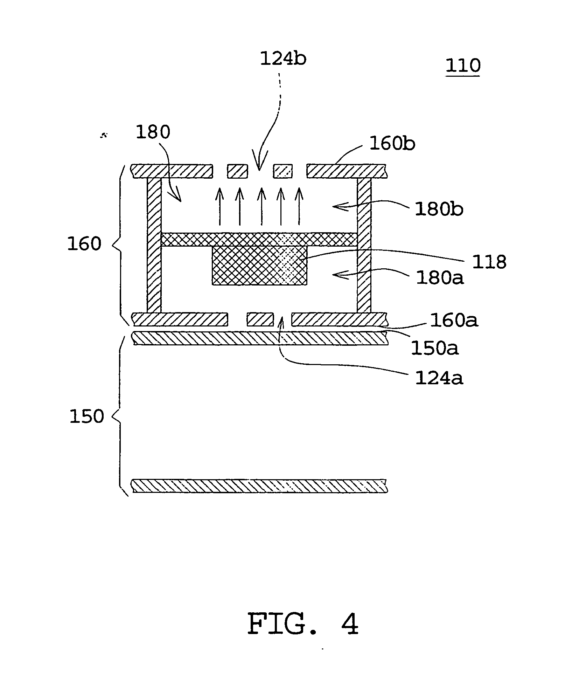

Please refer to FIG. 4 that is an enlarged cross-sectional view taken along line 4-4' of FIG. 2. As shown in FIG. 4, the cover 160 defines a compartment 180 inside the cover 160 to receive the receiver 118. After the receiver 118 is deposited in the compartment 180, the compartment 180 is divided into two small sub-compartments 180a, 180b. The sub-compartments 180a, 180b have substantially the same volume,and open to the outside of the cover 160 via the apertures 124a and 124b respectively. The cover 160 is folded on the base 150 in such a way that the front surface 160a of the cover 160 rests against the front surface 150a of the base 150 as shown in FIGS. 2 and 4, the sound generated by the receiver 118 radiates out of the cover 160 via the apertures 124b because the apertures 124a are blocked by the front surface 150a of the base 150. Therefore, the user can listen to the sound generated by the receiver 118 by approaching his (her) ear to the apertures 124b when the cover 160 is folded to the base 150 with the front surface 160a of the cover 160 resting against the front face 150a of the cover 150. By the design that the apertures 124a and 124b have substantially the same total cross-sectional area, and the sub-compartments 180a, 180b have substantially the same volume, the voice volume generated by the receiver 118 can be maintained substantially at the same level whether the sound is transmitted through the apertures 124a or the apertures 124b.

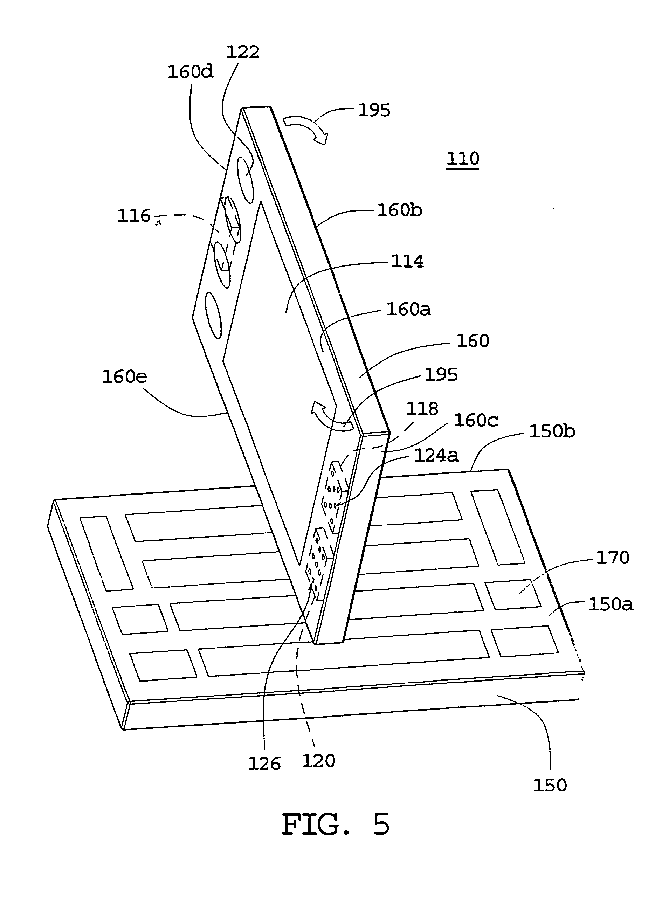

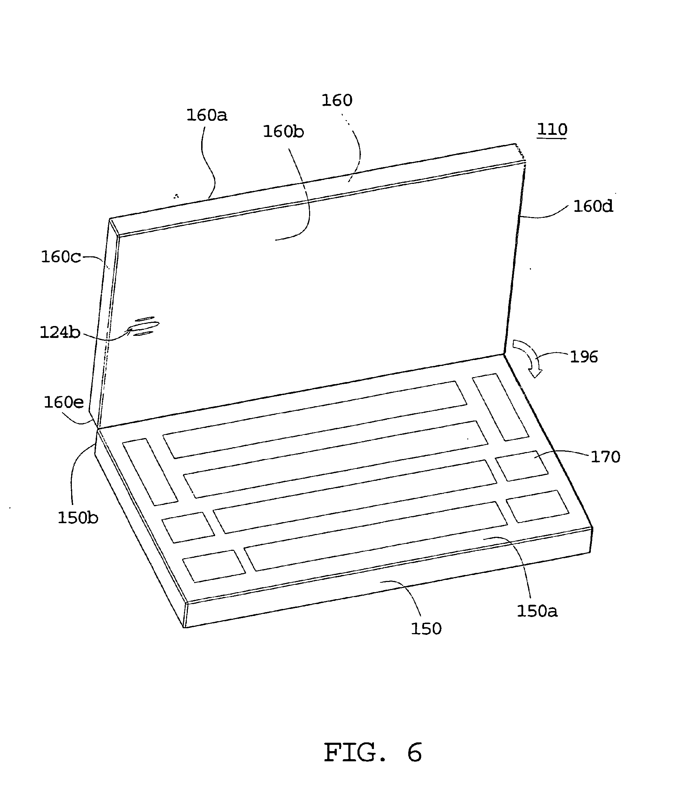

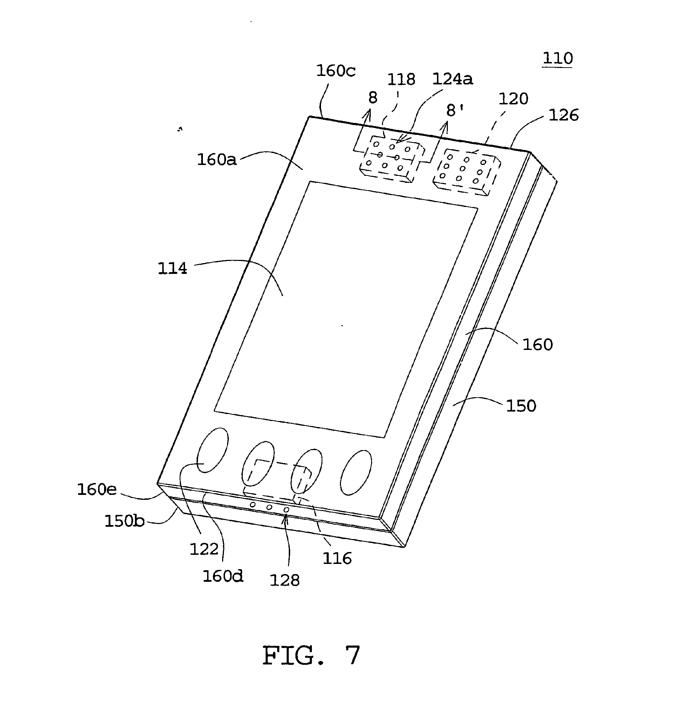

When the user wants to turn the cover 160 upside down relative to the base 150, first, the user has to unfold the cover 160 from the base 150 from the position of FIG. 2 to a position that the cover 160 is perpendicular to the base 150 as shown in FIG. 3. Then, the user can turn the cover 160 according to the direction pointed out by arrows 190 of FIG. 3, and the cover 160 is turned around a central point of the lateral surface 160e of the cover 160 as shown in FIG. 5. When the cover 160 is unfolded from the base 150, the receiver 118 is turned off and the user can use the speaker 120 to listen to the voice information of the device 110. Then, the user can turn the cover 160 according to the direction pointed out by arrows 195 as shown in FIG. 5 until the rear surface 160b of the cover 160 faces the front surface 150a of the base 150 as shown in FIG. 6; that is, the cover 160 is turned 180 degrees from the position of FIG. 3 to the position of FIG. 6. At this moment, the user can still use the speaker 120 to listens to the voice information of the device 110. Finally, the user can fold the cover 160 according to the direction pointed out by an arrow 196 in FIG. 6 until rear surface 160b of the cover 160 rests on the front surface 150a of the base 150 as shown in FIG. 7. In FIG. 7, the rear surface 160b of the cover 160 rests against the front surface 150a of the base 150 and the front surface 160a of the cover 160 faces in a direction away from the front surface 150a of the base 150. At the position of FIG. 7, the speaker 120 is turned off, and the device 110 can be easily inputted with commands or text by using the stylus to activate the touch display panel 114 and operating the buttons 122.

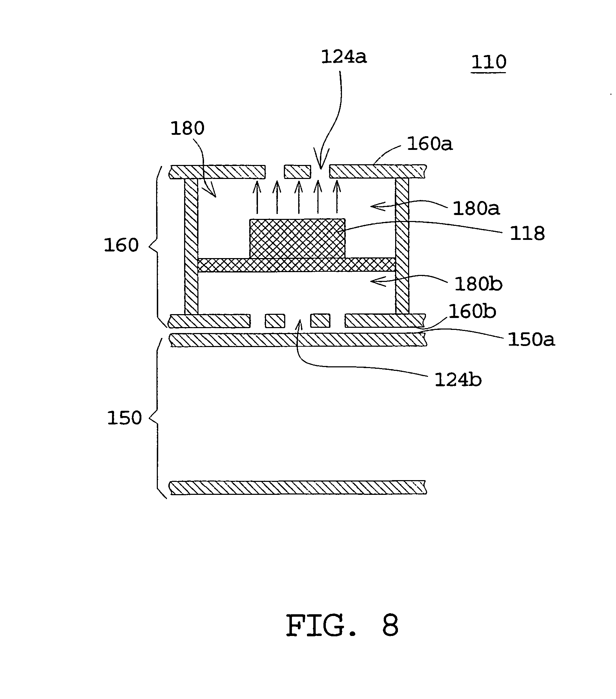

Please refer to FIG. 8 that is an enlarged cross-sectional view taken along line 8-8' of FIG. 7. At this position, the receiver 118 is turned on and the speaker 120 is turn off, and the sound of the receiver 118 radiates to the outside of the cover 160 via the apertures 124a because the apertures 124b are blocked by the front surface 150a of the base 150. So, the user can listen to the voice information of the device by approaching his (her) ear to the apertures 124a. To return the cover 160 from the position of FIG. 7 to the position of FIG. 2, the user needs to reverse the operations as mentioned above.

The portable electronic communication device 110 according to the invention can be implemented as a wireless personally digital assistant (wireless PDA) or a smart phone. Furthermore, the touch display panel can be a liquid crystal display panel (LCD panel) or an organic light emitting diode (OLED). The device 110 can form a slot (not shown in the drawings) in the base 150 or the cover 160 to accommodate the stylus.

The design of the present invention has advantages that the user can hear voice information by approaching his (her) ear to the front or rear surface of the cover in which only one receiver is equipped. Therefore, the usability of the communication device is enhanced without increasing the cost thereof. Furthermore, when the cover is unfolded from the base, the speaker is turned on by which the phone function of the device 110 can still work when the user uses the device 110 for other function such as schedule editing.

## Claims

1. A portable electronic communication device comprising:
a base (150) having a front surface ;
a cover (160), which is mounted to the base (150) in such a way that the cover (160) can be folded upon, unfolded from, and turned around the base (150),
**characterized in that** the cover (160) has a compartment (180), a front surface (160a), and a rear surface (160b),
wherein the front surface (160a) and the rear surface (160b) of the cover (160) have a plurality of first apertures (124a) and a plurality of second apertures (124b) respectively, and the compartment (180) communicates with an outside of the cover (160) through the first apertures (124a) and the second apertures (124b);
that a receiver (118) is deposited in the compartment (180) between the first apertures (124a) and the second apertures (124b), wherein sound generated by the receiver (118) can be transmitted through the first (124a) or second apertures (124b) when the cover (160) is folded upon the base (150) in such a way that the front surface (160a) or the rear surface (160b) of the cover (160) rests against the front surface of the base (150),
wherein the receiver (118) divides the compartment (180) into a first sub-compartment (180a) and a sub-second compartment (180b), the first sub-compartment (180a) and the second sub-compartment (180b) communicate with the outside of the cover (160) through the first apertures (124a) and the second apertures (124b) respectively, and the first sub-compartment (180a) has a volume which is substantially equal to that of the second sub-compartment (180b)
that a microphone (116) is deposited inside the cover (160) for receiving voice of a user of the device, and
that a speaker (120) is deposited inside the cover (160), the speaker (120) generating sound while the cover (160) is unfolded from the base (150).

2. The portable electronic communication device according to claim 1, wherein the first apertures (124a) have a total cross-sectional area, which is substantially the same as that of the second apertures (124b).

3. The portable electronic communication device according to claim 1 further comprising a display panel (114) deposited on the front surface (160a) of the cover (160) for displaying data of the device (110).

4. The portable electronic communication device according to claim 3, wherein the display panel (114) is a touch display panel adapted to be activated by a stylus.

5. The portable electronic communication device according to claim 1 further.comprising an operating button (122) for inputting a command.

6. The portable electronic communication device according to claim 1 further comprising a keyboard (170) deposited on the front surface (150a) of the base (150) for inputting data or a command.

## Patentansprüche

1. Tragbare elektronische Kommunikationsvorrichtung, umfassend:
eine Basis (150) mit einer vorderen Oberfläche;
eine Abdeckung (160), die an der Basis (150) derart befestigt ist, dass die Abdeckung (160) auf die Basis (150) geklappt, von der Basis weg geklappt und
um die Basis gedreht werden kann,
**dadurch gekennzeichnet, dass** die Abdeckung (160) ein Fach (180), eine vordere Oberfläche (160a) und einer hintere Oberfläche (160b) aufweist, wobei die vordere Oberfläche (160a) und die hintere Oberfläche (160b) jeweils eine Vielzahl von ersten Öffnungen (124a) und eine Vielzahl von zweiten Öffnungen (124b) aufweisen und das Fach (180) mit der Außenseite der Abdeckung (160) über die ersten Öffnungen (124a) und die zweiten Öffnungen (123b) in Verbindung steht;
dass ein Empfänger (118) in dem Fach (180) zwischen den ersten Öffnungen (124a) und den zweiten Öffnungen (124b) angeordnet ist, wobei ein von dem Empfänger (118) erzeugter Ton über die ersten Öffnungen (124a) oder zweiten Öffnungen (124b) übertragen werden kann, wenn die Abdeckung (160) derart auf die Basis (150) geklappt ist, dass die vordere Oberfläche (160a) oder die hintere Oberfläche (160b) der Abdeckung (160) gegen die vordere Oberfläche der Basis (150) anliegt,
wobei der Empfänger (118) das Fach (180) in ein erstes Unterfach (180a) und ein zweites Unterfach (180b) unterteilt, das erste Unterfach (180a) und das zweite Unterfach (180b) mit der Außenseite der Abdeckung (160) jeweils über die ersten Öffnungen (124a) und die zweiten Öffnungen (124b) in Verbindung stehen, und das erste Unterfach (180a) ein Volumen aufweist, das im Wesentlichen gleich dem des zweiten Unterfachs (180b) ist,
dass ein Mikrofon (116) innerhalb der Abdeckung (160) angeordnet ist, um eine Stimme eines Anwenders der Vorrichtung zu empfangen, und
dass ein Lautsprecher (120) innerhalb der Abdeckung (160) angeordnet ist,
wobei der Lautsprecher (120) einen Ton erzeugt, während die Abdeckung (160) von der Basis (150) weggeklappt ist.

2. Tragbare elektronische Kommunikationsvorrichtung nach Anspruch 1, wobei die ersten Öffnungen (124a) einen Gesamtquerschnittsbereich aufweisen, der im Wesentlichen gleich dem der zweiten Öffnungen (124b) ist.

3. Tragbare elektronische Kommunikationsvorrichtung nach Anspruch 1, ferner umfassend ein Anzeigefeld (114), das auf der vorderen Oberfläche (160a) der Abdeckung (160) angeordnet ist, um Daten der Vorrichtung (110) anzuzeigen.

4. Tragbare elektronische Kommunikationsvorrichtung nach Anspruch 3, wobei das Anzeigefeld (114) ein Berührungs-Anzeigefeld ist, das mit einem Stift aktiviert wird.

5. Tragbare elektronische Kommunikationsvorrichtung nach Anspruch 1, ferner umfassend einen Betätigungsknopf (122) zum Eingeben eines Befehls.

6. Tragbare elektronische Kommunikationsvorrichtung nach Anspruch 1, ferner umfassend eine Tastatur (170), die auf der vorderen Oberfläche (150a) der Basis (150) angeordnet ist, um Daten oder einen Befehl einzugeben.

## Revendications

1. Dispositif de communication électronique portable comprenant :
une base (150) ayant une surface avant ;
un capot (160), qui est monté sur la base (150) de manière à ce que le capot (160) puisse être replié sur la base (150), déplié de celle-ci, et tourné autour de celle-ci,
**caractérisé en ce que** le capot (160) comporte un compartiment (180), une surface avant (160a) et une surface arrière (160b), dans lequel la surface avant (160a) et la surface arrière (160b) du capot (160) comportent une pluralité de premières ouvertures (124a) et une pluralité de deuxièmes ouvertures (124b), respectivement, et le compartiment (180) communique avec l'extérieur du capot (160) à travers les premières ouvertures (124a) et les deuxièmes ouvertures (124b) ;
**en ce qu'**un récepteur (118) est disposé dans le compartiment (180) entre les premières ouvertures (124a) et les deuxièmes ouvertures (124b), dans lequel un son généré par le récepteur (118) peut être transmis à travers les premières (124a) ou les deuxièmes (124b) ouvertures lorsque le capot (160) est replié sur la base (150) de manière à ce que la surface avant (160a) ou la surface arrière (160b) du capot (160) repose contre la surface avant de la base (150),
dans lequel le récepteur (118) divise le compartiment (180) en un premier compartiment secondaire (180a) et un deuxième compartiment secondaire (180b), le premier compartiment secondaire (180a) et le deuxième compartiment secondaire (180b) communiquent avec l'extérieur du capot (160) à travers les premières ouvertures (124a) et les deuxièmes ouvertures (124b), respectivement, et le premier compartiment secondaire (180a) a un volume qui est sensiblement identique à celui du deuxième compartiment secondaire (180b),
**en ce qu'**un microphone (116) est disposé à l'intérieur du capot (160) pour recevoir la voix d'un utilisateur du dispositif, et
**en ce qu'**un haut-parleur (120) est disposé à l'intérieur du capot (160), le haut-parleur (120) générant un son alors que le capot (160) est déplié de la base (150).

2. Dispositif de communication électronique portable selon la revendication 1, dans lequel les premières ouvertures (124a) ont une section transversale totale, qui est sensiblement identique à celle des deuxièmes ouvertures (124b).

3. Dispositif de communication électronique portable selon la revendication 1, comprenant en outre un panneau d'affichage (114) disposé sur la surface avant (160a) du capot (160) pour afficher des données du dispositif (110).

4. Dispositif de communication électronique portable selon la revendication 3, dans lequel le panneau d'affichage (114) est un panneau d'affichage tactile adapté pour être activé par un stylet.

5. Dispositif de communication électronique portable selon la revendication 1, comprenant en outre un bouton d'actionnement (122) pour entrer une commande.

6. Dispositif de communication électronique portable selon la revendication 1, comprenant en outre un clavier (170) disposé sur la surface avant (150a) de la base (150) pour entrer des données ou une commande.
